# EUROPEAN PATENT APPLICATION

(11) **EP 3 401 775 A1**
(43) Date of publication of application: **14.11.2018**
(21) Application number: 18157041.7
(22) Date of filing: 15.02.2018
(51) Int. Cl.: G06F 3/06, H04L 29/08

(54) **OBJECT OVERLAY FOR STORAGE-AREA NETWORK (SAN) APPLIANCES**

(30) Priority: 10.05.2017 US 201715591169
(71) Applicant: Strato Scale Ltd., 46733 Herzliya (IL)
(72) Inventor: TRAEGER, Avishay, 71711 Modi'in (IL); BUCHBINDER, Rafael, 5545149 Kiryat Ono (IL)
(74) Representative: Beck Greener

(57) **Abstract**

There is provided a system for data storage includes a plurality of servers. Each server includes a respective client interface for communicating with one or more clients, and a respective Storage Area Network (SAN) interface for communicating with a SAN appliance. The servers are configured to (i) create on the SAN appliance a plurality of logical volumes, each logical volume uniquely owned by a respective one of the servers, (ii) receive from the clients storage commands relating to one or more objects, in accordance with an object-storage Application Programming Interface (API), and (iii) in response to the storage commands, maintain the objects in the logical volumes on the SAN appliance using a SAN protocol.

## Description

The present invention relates generally to data storage, and particularly to methods and systems for object storage.

Data storage systems use a wide variety of communication protocols and Application Programming Interfaces (APIs). Some protocols store data in terms of objects. Examples of object storage protocols include the Amazon Simple Storage Service (S3), OpenStack Swift, Microsoft Azure Block Blobs, and Google Cloud Storage. Other protocols store data in terms of blocks, e.g., using a file system that manages logical volumes. Examples of block storage protocols include the Internet Small Computer Systems Interface (iSCSI) and Fibre-Channel (FC) protocols. The iSCSI protocol is specified by the Internet Engineering Task Force (IETF) in "Internet Small Computer Systems Interface (iSCSI)," RFC 3720, April, 2004, which is incorporated herein by reference. The FC protocol is specified by the IETF in "Fibre Channel (FC) Frame Encapsulation," RFC 3643, December, 2003, which is incorporated herein by reference.

According to a first aspect of the present invention, there is provided a system for data storage, comprising a plurality of servers, each server comprising a respective client interface for communicating with one or more clients, and a respective Storage Area Network (SAN) interface for communicating with a SAN appliance, wherein the servers are configured to: create on the SAN appliance a plurality of logical volumes, each logical volume uniquely owned by a respective one of the servers; receive from the clients storage commands relating to one or more objects, in accordance with an object-storage Application Programming Interface (API); and in response to the storage commands, maintain the objects in the logical volumes on the SAN appliance using a SAN protocol.

An embodiment of the present invention that is described herein provides a data storage system including a plurality of servers. Each server includes a respective client interface for communicating with one or more clients, and a respective Storage Area Network (SAN) interface for communicating with a SAN appliance. The servers are configured to (i) create on the SAN appliance a plurality of logical volumes, each logical volume uniquely owned by a respective one of the servers, (ii) receive from the clients storage commands relating to one or more objects, in accordance with an object-storage Application Programming Interface (API), and (iii) in response to the storage commands, maintain the objects in the logical volumes on the SAN appliance using a SAN protocol.

In some embodiments, each server is configured to execute any of the storage commands, regardless of whether the logical volumes, which hold the objects accessed by the storage commands, are owned by that server or not. In some embodiments, the servers are configured to maintain the objects by maintaining a data structure, which is accessible to the multiple servers and which holds storage locations of the objects in the logical volumes on the SAN appliance.

In an embodiment, when a storage command includes a write command for writing at least a part of an object, a server assigned to execute the storage command is configured to (i) store the at least part of the object in a storage location in a logical volume owned by the server, and (ii) record the storage location in a data structure accessible to the multiple servers. Additionally or alternatively, when a storage command includes a read command for reading at least a part of an object, a server assigned to execute the storage command is configured to (i) obtain a storage location of the at least part of the object from a data structure accessible to the multiple servers, and (ii) read the at least part of the object from the storage location. Further additionally or alternatively, when a storage command includes a delete command for deleting at least a part of an object, a server assigned to execute the storage command is configured to mark a metadata of the at least part of the object, in a data structure accessible to the multiple servers, as deleted.

In some embodiments, for each logical volume, the server owning the logical volume is configured to attach to the logical volume with a permission to read and write, and wherein the servers that do not own the logical volume are configured to attach to the logical volume with a permission to read only. In some embodiments the system further includes a load-balancing processor configured to assign the storage commands to the servers.

According to a second aspect of the present invention, there is provided a method for data storage, comprising: in a system comprising a plurality of servers, creating on a Storage Area Network (SAN) appliance a plurality of logical volumes, each logical volume uniquely owned by a respective one of the servers; receiving, from one or more clients, storage commands relating to one or more objects, in accordance with an object-storage Application Programming Interface (API); and in response to the storage commands, maintaining the objects in the logical volumes on the SAN appliance using a SAN protocol.

In an aspect, there is provided a method for data storage in a system comprising a plurality of servers, the method comprising: creating on a Storage Area Network (SAN) appliance a plurality of logical volumes, each logical volume uniquely owned by a respective one of the servers; receiving, from one or more clients, storage commands relating to one or more objects, in accordance with an object-storage Application Programming Interface (API); and in response to the storage commands, maintaining the objects in the logical volumes on the SAN appliance using a SAN protocol.

In an embodiment, maintaining the objects comprises executing any of the storage commands by any server, regardless of whether the logical volumes, which hold the objects accessed by the storage commands, are owned by that server or not.

In an embodiment, maintaining the objects comprises maintaining a data structure, which is accessible to the multiple servers and which holds storage locations of the objects in the logical volumes on the SAN appliance.

In an embodiment, when a storage command comprises a write command for writing at least a part of an object, maintaining the objects comprises executing the storage command by an assigned server, by (i) storing the at least part of the object in a storage location in a logical volume owned by the server, and (ii) recording the storage location in a data structure accessible to the multiple servers.

In an embodiment, when a storage command comprises a read command for reading at least a part of an object, maintaining the objects comprises executing the storage command by an assigned server, by (i) obtaining a storage location of the at least part of the object from a data structure accessible to the multiple servers, and (ii) reading the at least part of the object from the storage location.

In an embodiment, when a storage command comprises a delete command for deleting at least a part of an object, maintaining the objects comprises marking a metadata of the at least part of the object, in a data structure accessible to the multiple servers, as deleted.

In an embodiment, maintaining the objects in the logical volumes comprises, for each logical volume, attaching the server owning the logical volume to the logical volume with a permission to read and write, and attaching the servers that do not own the logical volume to the logical volume with a permission to read only.

There is additionally provided, in accordance with an embodiment of the present invention, a method for data storage, including, in a system including a plurality of servers, creating on a Storage Area Network (SAN) appliance a plurality of logical volumes, each logical volume uniquely owned by a respective one of the servers. Storage commands, relating to one or more objects, are received from one or more clients in accordance with an object-storage Application Programming Interface (API). The objects are maintained in the logical volumes on the SAN appliance using a SAN protocol, in response to the storage commands.

There is further provided, in accordance with an embodiment of the present invention, a computer software product, the product including a tangible non-transitory computer-readable medium in which program instructions are stored, which instructions, when read by multiple processors of multiple respective servers, cause the processors to (i) create on the SAN appliance a plurality of logical volumes, each logical volume uniquely owned by a respective one of the servers, (ii) receive from one or more clients storage commands relating to one or more objects, in accordance with an object-storage Application Programming Interface (API), and (iii) in response to the storage commands, maintain the objects in the logical volumes on the SAN appliance using a SAN protocol.

The present invention will be more fully understood from the following detailed description of the embodiments thereof, taken together with the drawings in which:
Fig. 1 is a block diagram that schematically illustrates a system for object storage in a Storage-Area Network (SAN) appliance, in accordance with an embodiment of the present invention;
Fig. 2 is a flow chart that schematically illustrates a method for uploading an object, in accordance with an embodiment of the present invention; and
Fig. 3 is a flow chart that schematically illustrates a method for downloading an object, in accordance with an embodiment of the present invention.

### OVERVIEW

Embodiments of the present invention that are described herein provide improved methods and systems for data storage. In some embodiments, a storage system receives storage commands from clients in accordance with an object-storage API, such as S3, but carries out the actual storage on a Storage Area Network (SAN) appliance using a SAN block storage protocol, such as iSCSI or FC.

In an embodiment, the system comprises multiple servers that are each configured to communicate with the clients and with the SAN appliance. The servers create multiple logical volumes on the SAN appliance, each logical volume uniquely owned by one of the servers. For a given logical volume, the owning server attaches to the volume with both read and write privileges, while the other servers attach to the volume with read-only privileges.

In this embodiment, the procedures for writing, reading and deleting objects are defined such that any of the servers is able to handle any of the storage commands from any of the clients. For example, any server is able to read and delete an object, regardless of whether the object was originally written by the same server (i.e., regardless of whether or not the object resides in a logical volume owned by the same server). For this purpose, the servers typically maintain a shared data structure (e.g., a distributed key-value store) in which, among other metadata, the servers record the storage locations of the various objects in the logical volumes on the SAN appliance.

The methods and systems described herein enable deployment of object storage services in traditional SAN environments, e.g., on commodity SAN appliances. By using a plurality of servers that can each access all data and metadata and can handle any storage command, the disclosed techniques are highly reliable and scalable.

### SYSTEM DESCRIPTION

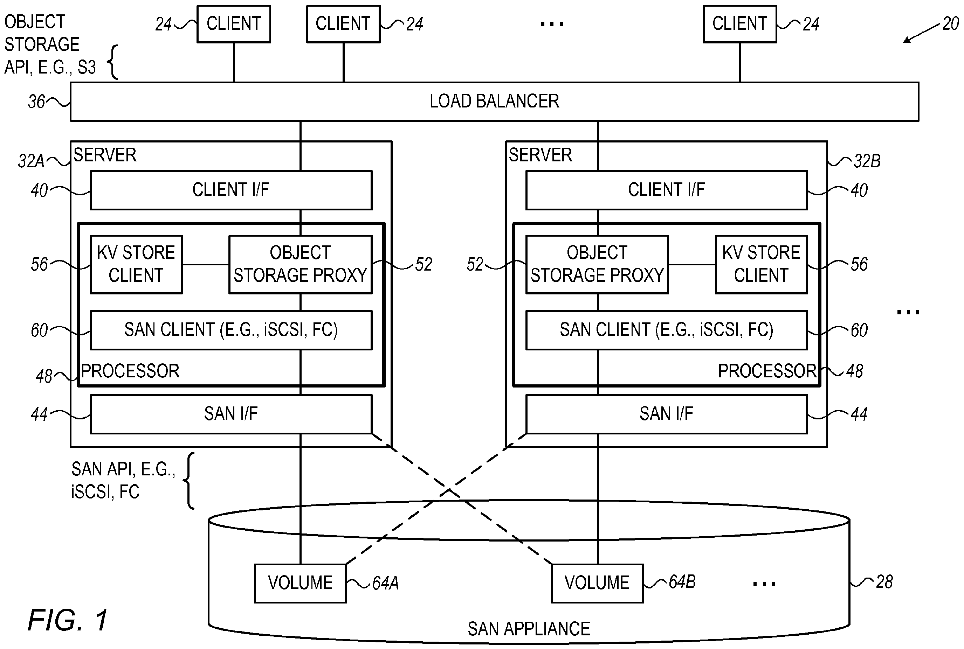

Fig. 1 is a block diagram that schematically illustrates a storage system 20, in accordance with an embodiment of the present invention. System 20 communicates with one or more clients 24 using an object-storage API, and stores objects on behalf of the clients on a SAN appliance 28 using a SAN API.

SAN appliance 28 may comprise, for example, a hardware/software appliance as provided, for example, by vendors such as Dell EMC (Hopkinton, Massachusetts) and NetApp (Sunnyvale, California), for example. Alternatively, any other block storage system or appliance can be used for this purpose. Clients 24 may comprise any suitable computing platforms. In a typical embodiment, clients 24 are third-party clients external to system 20.

In some embodiments, system 20 comprises multiple servers 32. Fig. 1 shows two servers denoted 32A and 32B, for simplicity. Generally, however, system 20 may comprise any suitable number of servers. System 20 further comprises a load balancer 36 (also referred to as load-balancing processor) that mediates between clients 24 and servers 32. Servers 32 and load balancer 36 may comprise any suitable type of computers.

The description that follows refers to the S3 object-storage API, for the sake of clarity. In alternative embodiments, servers 32 and load balancer 36 may communicate with clients 24 using any other suitable object-storage API, such as, for example, OpenStack Swift, Microsoft Azure Block Blobs or Google Cloud Storage. In the present context, the term "object-storage API" refers to an API that manages data as objects (as opposed to file storage that manages data as a file hierarchy, and block storage that manages data as blocks). Each object typically comprise the data itself, certain metadata, and a globally unique object name). The terms "API" and "protocol" are used interchangeably herein.

The description that follows also refers to the iSCSI protocol, for the sake of clarity. In alternative embodiments, servers 32 may communicate with SAN appliance 28 using any other suitable block-storage protocol or SAN protocol, such as, for example, Fibre-Channel (FC). In the present content, the terms "block-storage protocol" and "SAN protocol" refer to a data-access protocol in which operations are performed on specific block indices in a virtual disk, with no higher-level constructs such as files, directories or objects. In the present context, the term "block storage" refers to an API having operations such as creation, deletion and listing of virtual disks, as well as support for at least one block-storage protocol such as iSCSI or FC. The terms "API" and "protocol" are sometimes used interchangeably herein.

In the embodiment of Fig. 1, each server comprises a client interface 40 for communicating with clients 24 (possibly via load balancer 36) using the object-storage API, a SAN interface 44 for communicating with SAN appliance 28 using the SAN protocol, and a processor 48 that is configured to carry out the methods described herein. Each processor 48 runs several software modules, namely an object storage proxy 52, a Key-Value (KV) store client 56 and a SAN client 60. The functions of these software modules are explained in detail below.

Typically, servers 32 are implemented using separate physical machines, processors 48 comprise physical hardware-implemented processors, and interfaces 40 and 44 comprise network interfaces such as physical Network Interface Controllers (NICs). Load balancer 32 typically comprises one or more physical processors.

The configuration of each server 32, and of system 20 as a whole, shown in Fig. 1, are example configurations that are chosen purely for the sake of conceptual clarity. In alternative embodiments, any other suitable configurations can be used. For example, the system may be implemented without the use of load balancer 36. In some embodiments, servers 32 are dedicated to the task of storage using the disclosed techniques. In other embodiments, servers 32 may carry out additional functions, possibly unrelated to storage. Alternatively to a KV store, the shared metadata can be stored using any other suitable data structure or technology, for example in a database or on SAN appliance 28.

The various elements of system 20, including servers 32 and their components, SAN appliance 28 and load balancer 36, may be implemented using hardware/firmware, such as in one or more Application-Specific Integrated Circuit (ASICs) or Field-Programmable Gate Array (FPGAs). Alternatively, some system elements may be implemented in software or using a combination of hardware/firmware and software elements. In some embodiments, processors 48 may comprise general-purpose processors, which are programmed in software to carry out the functions described herein. The software may be downloaded to the processors in electronic form, over a network, for example, or it may, alternatively or additionally, be provided and/or stored on non-transitory tangible media, such as magnetic, optical, or electronic memory.

### IMPLEMENTATION OF OBJECT STORAGE ON A SAN APPLIANCE

In some embodiments, system 20 receives from clients 24 storage commands in accordance with an object-storage API, e.g., S3. The storage commands may request, for example, to write, read or erase an object or part of an object. Although clients 24 issue object-storage commands, system 20 carries out the actual storage on SAN appliance 28 using a block storage protocol (e.g., iSCSI or FC). Clients 24 are typically unaware of the underlying block-storage scheme, and are exposed only to the overlay object-storage API.

In some embodiments, system 20 creates a plurality of logical volumes 64 on SAN appliance 28. The logical volumes are also referred to as user volumes, or simply volumes for brevity. The creation and management of logical volumes may be performed by servers 32 themselves or by some centralized management service. Each logical volume 64 is uniquely owned by one of servers 32. In the present example, a logical volume 64A is owned by server 32A, and a logical volume 64B is owned by server 32B.

Typically, a server attaches to the logical volume it owns with read and write privileges, and to the logical volumes it does not own with read-only privileges. In other words, each server is permitted to read from any of the logical volumes, but to write only to the logical volume it owns. In Fig. 1, read/write attachments are marked with solid lines, and read-only attachments are marked with dashed lines. The attachment may be established *a-priori* or on-demand.

(In an alternative embodiment, a single logical volume may be shared by multiple servers, or even by all servers. This implementation, however, requires that SAN appliance 28 supports read/write attachment by multiple servers to the same volume.)

In some embodiments, e.g., when SAN appliance 28 supports thin provisioning, each logical volume 64 is allocated the maximum size supported by the SAN appliance. In other embodiments, the allocated size of each logical volume 64 is set to the total storage space available for object storage on the SAN appliance, divided by the number of servers. Further alternatively, any other suitable size allocation can be used.

Servers 32 store the objects received from clients 24 in logical volumes 64. Typically, for each object, system 20 maintains three types of information:
▪ Object data: The data provided by client 24 for storage in the object.
▪ User-defined metadata: Metadata provided by client 24, to be stored with the object and to be accessible to the client. The user-defined metadata may comprise, for example, the object name.
▪ System-internal metadata: Metadata that pertains to the object but is defined internally by system 20 and is not exposed to clients 24. The system-internal metadata may comprise, for example, the storage location ("mapping") of the object on SAN appliance 28. The storage location may be specified, for example, as the name of the logical volume in which the object is stored, and an address within the logical volume.

In some embodiments, the metadata (both user-defined and system-internal) may be stored on servers 32, e.g., in-memory, on local disk or on some remote storage. In other embodiments, the metadata (both user-defined and system-internal) may be stored on SAN appliance 28. In yet other embodiments, the metadata (both user-defined and system-internal) may be stored on SAN appliance 28 and cached on servers 32. Storing the metadata on SAN appliance 28 enables the SAN appliance to hold both data and metadata together, and allows for full recovery of objects in case of failure in servers 32. Storing the metadata on servers 32, on the other hand, enables faster access.

Typically, system 20 is designed such that any server 32 is capable of processing any storage command (e.g., object write, object read, object delete) from any client 24 without having to forward storage commands to other servers. For this purpose, in some embodiments servers 32 maintain a shared data structure that is accessible to all servers 32 and stores the system-internal metadata (e.g., the storage locations of the various objects in logical volumes 64). Any suitable type of data structure can be used.

In the present example, the shared data structure comprises a Key-Value (KV) store. In an embodiment, the KV store is distributed among servers 32 and stored in-memory (i.e., in the volatile memories of the servers, e.g., RAM, for fast access). The KV store is backed-up periodically to SAN appliance 28.

In each server 32, processor 48 is configured to (i) access the distributed KV store using the respective KV store client 56, (ii) communicate with clients 24 in accordance with the object-storage API using the respective object-storage proxy 52, and (iii) communicate with SAN client 28 in accordance with the SAN block-storage protocol using the respective SAN client 60.

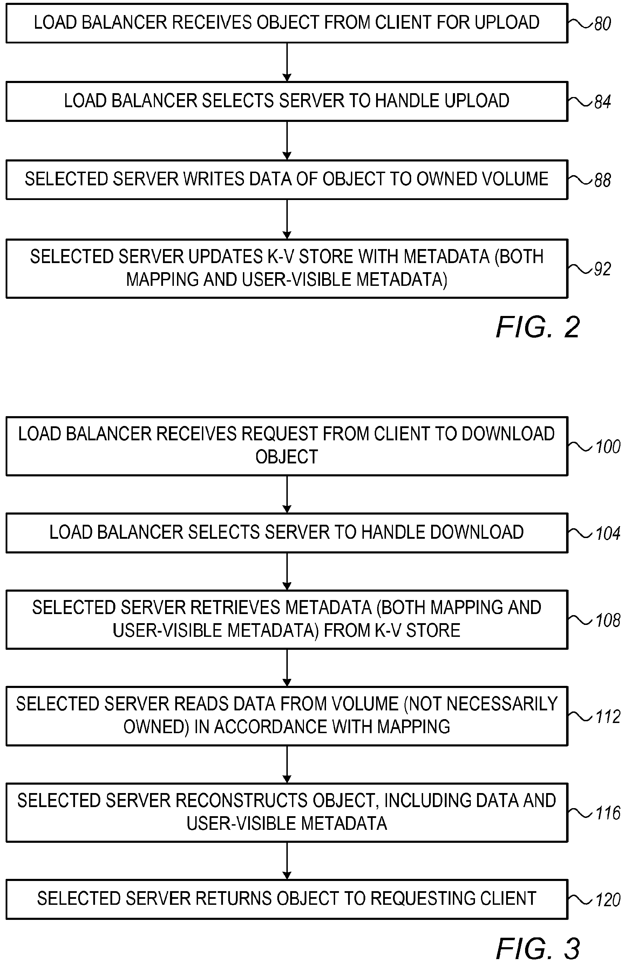

Fig. 2 is a flow chart that schematically illustrates a method for uploading (writing) an object, in accordance with an embodiment of the present invention. The method begins with load balancer 36 receiving, from one of clients 24, a storage command requesting to upload a certain object, at an object input step 80.

At a server selection step 84, load balancer 36 selects one of servers 32 for executing the storage command. As explained above, the system architecture allows any server to execute any command. Load balancer 36 may choose the server using any suitable criterion, e.g., using Round-Robin scheduling, using some prioritization scheme, based on current or anticipated load levels of the servers, or in any other suitable way.

At a writing step 88, the selected server 32 stores the object in the corresponding logical volume 64 (in the logical volume owned by the selected server). At a mapping updating step 92, the selected server updates the distributed KV store with the storage location of the object. Following this update, any of the servers will be able to read or delete this object. Typically, each server 32 maintains mappings and free extents of the logical volumes it owns.

In the present example, the selected server stores the user-defined metadata in the distributed KV store, along with the system-internal metadata. Alternatively, however, the server may store the user-defined metadata on SAN appliance 28 along with the object data.

Fig. 3 is a flow chart that schematically illustrates a method for downloading (reading) an object, in accordance with an embodiment of the present invention. The method begins with load balancer 36 receiving, from one of clients 24, a storage command requesting to download a certain object, at an object request step 100.

At a server selection step 104, load balancer 36 selects one of servers 32 for executing the storage command. Load balancer 36 may choose the server using any suitable criterion.

At a metadata readout step 108, the selected server accesses the distributed KV store and retrieves the metadata of the requested object. From the metadata, the selected server identifies the storage location in which the requested object is stored. As explained above, the logical volume in which the object is stored may or may not be owned by the selected server.

At an object readout step 112, the selected server reads the object data from the storage location indicated by the metadata retrieved at step 108. If the logical volume being read is owned by the selected server, the server reads the object data using its read-write attachment to that volume. If the logical volume is not owned by the selected server, the server reads the object data using its read-only attachment to the volume.

At an object reconstruction, the selected server reconstructs the object, comprising both object data and user-defined metadata. At an object serving step 120, the selected server provides the object to the requesting client 24.

The method flows above are example flows, which are depicted purely for the sake of conceptual clarity. In alternative embodiments, servers 32 may carry out any other suitable storage command in any other suitable way. For example, a client may issue a storage command that requests deletion of an object. In an embodiment, any server (e.g., a server selected by load balancer 36) may delete an object, by marking the mappings of the object in the KV store as deleted. In this embodiment, each server carries out a background "garbage collection" process that frees mappings of deleted objects from the logical volumes it owns.

Additional operations on the system-defined metadata, e.g., creation of buckets in accordance with the object-storage API, can also be carried out by any of servers 32 using the distributed KV store.

In various embodiments, servers 32 can manage the volume ownership records in various ways, such as via KV store locks. In such embodiments, if a server fails, its lock is released, and another server may take ownership of the volumes owned by the failed server. Using this technique, all logical volumes are continuously owned, and storage capacity is not lost. In an embodiment, if a logical volume reaches or approaches its maximum capacity, an additional volume will be allocated for the server.

The embodiments described above refer to entire objects as the minimal data unit that may be stored on SAN appliance 28. In alternative embodiments, servers 32 may store objects with finer granularity, in which an object is divided into multiple parts and each part is assigned a respective mapping in the system-defined metadata. Each part can be accessed independently of other parts. In these embodiments, different parts of the same object may be stored in different logical volumes owned by different servers. In such a case, the system-defined metadata of this object points to multiple different extents in multiple different logical volumes. As long as the distributed KV store records the storage locations of the various parts of the object, any server is still capable of reading or deleting any part of any object.

It will be appreciated that the embodiments described above are cited by way of example, and that the present invention is not limited to what has been particularly shown and described hereinabove. Rather, the scope of the present invention includes both combinations and sub-combinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

## Claims

1. A system for data storage, comprising a plurality of servers, each server comprising a respective client interface for communicating with one or more clients, and a respective Storage Area Network (SAN) interface for communicating with a SAN appliance, wherein the servers are configured to:
create on the SAN appliance a plurality of logical volumes, each logical volume uniquely owned by a respective one of the servers;
receive from the clients storage commands relating to one or more objects, in accordance with an object-storage Application Programming Interface (API); and
in response to the storage commands, maintain the objects in the logical volumes on the SAN appliance using a SAN protocol.

2. The system according to claim 1, wherein each server is configured to execute any of the storage commands, regardless of whether the logical volumes, which hold the objects accessed by the storage commands, are owned by that server or not.

3. The system according to claim 1 or 2, wherein the servers are configured to maintain the objects by maintaining a data structure, which is accessible to the multiple servers and which holds storage locations of the objects in the logical volumes on the SAN appliance.

4. The system according to any one of claims 1, 2 or 3, wherein, when a storage command comprises a write command for writing at least a part of an object, a server assigned to execute the storage command is configured to (i) store the at least part of the object in a storage location in a logical volume owned by the server, and (ii) record the storage location in a data structure accessible to the multiple servers.

5. The system according to any one of the preceding claims, wherein, when a storage command comprises a read command for reading at least a part of an object, a server assigned to execute the storage command is configured to (i) obtain a storage location of the at least part of the object from a data structure accessible to the multiple servers, and (ii) read the at least part of the object from the storage location.

6. The system according to any one of the preceding claims, wherein, when a storage command comprises a delete command for deleting at least a part of an object, a server assigned to execute the storage command is configured to mark a metadata of the at least part of the object, in a data structure accessible to the multiple servers, as deleted.

7. The system according to any one of the preceding claims, wherein, for each logical volume, the server owning the logical volume is configured to attach to the logical volume with a permission to read and write, and wherein the servers that do not own the logical volume are configured to attach to the logical volume with a permission to read only.

8. The system according to any one of the preceding claims, further comprising a load-balancing processor configured to assign the storage commands to the servers.

9. A method for data storage, comprising:
in a system comprising a plurality of servers, creating on a Storage Area Network (SAN) appliance a plurality of logical volumes, each logical volume uniquely owned by a respective one of the servers;
receiving, from one or more clients, storage commands relating to one or more objects, in accordance with an object-storage Application Programming Interface (API); and
in response to the storage commands, maintaining the objects in the logical volumes on the SAN appliance using a SAN protocol.

10. The method according to claim 9, wherein maintaining the objects comprises executing any of the storage commands by any server, regardless of whether the logical volumes, which hold the objects accessed by the storage commands, are owned by that server or not.

11. The method according to claim 9 or 10, wherein maintaining the objects comprises maintaining a data structure, which is accessible to the multiple servers and which holds storage locations of the objects in the logical volumes on the SAN appliance.

12. The method according to any one of claims 9, 10 or 11, wherein, when a storage command comprises a write command for writing at least a part of an object, maintaining the objects comprises executing the storage command by an assigned server, by (i) storing the at least part of the object in a storage location in a logical volume owned by the server, and (ii) recording the storage location in a data structure accessible to the multiple servers.

13. The method according to any one of claims 9 to 12, wherein, when a storage command comprises a read command for reading at least a part of an object, maintaining the objects comprises executing the storage command by an assigned server, by (i) obtaining a storage location of the at least part of the object from a data structure accessible to the multiple servers, and (ii) reading the at least part of the object from the storage location.

14. The method according to any one of claims 9 to 13, wherein, when a storage command comprises a delete command for deleting at least a part of an object, maintaining the objects comprises marking a metadata of the at least part of the object, in a data structure accessible to the multiple servers, as deleted.

15. The method according to any one of claims 9 to 14, wherein maintaining the objects in the logical volumes comprises, for each logical volume, attaching the server owning the logical volume to the logical volume with a permission to read and write, and attaching the servers that do not own the logical volume to the logical volume with a permission to read only.
